Europäisches Patentamt

European Patent Office

Office européen des brevets

(19)

(11) Veröffentlichungsnummer: **0 475 046 A2**

## (12) EUROPÄISCHE PATENTANMELDUNG

(21) Anmeldenummer: **91112578.9**

(22) Anmeldetag: **26.07.91**

(51) Int. Cl.⁵: **C08K 3/00**, C08L 21/00, B01J 2/22, //(C08K3/00,3:22, 3:36)

(30) Priorität: **14.09.90 DE 4029158**

(43) Veröffentlichungstag der Anmeldung: **18.03.92 Patentblatt 92/12**

(84) Benannte Vertragsstaaten:
**BE DE ES FR GB IT NL**

(71) Anmelder: **Degussa Aktiengesellschaft**
**Weissfrauenstrasse 9**
**W-6000 Frankturt am Main 1(DE)**

(72) Erfinder: **Wolff, Siegfried, Dr.**
**Weiherstrasse 28**
**W-5303 Bornheim-Merten(DE)**
Erfinder: **Görl, Udo, Dr.**
**Herderstrasse 38**
**W-5303 Bornheim-Roisdorf(DE)**
Erfinder: **Meier, Karl**
**Roisdorfer Weg 5**
**W-5305 Alfter(DE)**

(54) Verfahren zur Herstellung von aus Zinkoxid und Kieselsäure bestehenden Granulaten, diese Granulate und ihre Verwendung.

(57) Die Erfindung betrifft aus Zinkoxid und gefällter Kieselsäure bestehende, in Kautschukmischungen gut dispergierbare Granulate, ein Verfahren zu deren Herstellung und ihre Verwendung

EP 0 475 046 A2

Die Erfindung betrifft aus Zinkoxid und gefällter Kieselsäure bestehende, gut dispergierbare Granulate, ein Verfahren zu deren Herstellung und ihre Verwendung.

Mit wachsendem Umweltbewußtsein der Gesellschaft und den zunehmenden Auflagen für die Sicherheit am Arbeitsplatz greift die Gummi-Industrie - wie andere Industrien auch - auf den Einsatz nicht oder nur wenig staubender Ausgangsprodukte zurück. Die Forderungen an den Hersteller von Rohprodukten, diese in staubarmer Form anzubieten, werden immer dringlicher. Ein weiteres Anliegen der gummiverarbeitenden Industrie ist die Verwendung von förder- und silierbaren Rohstoffen. Diese ermöglichen eine deutliche Vereinfachung im Handling, indem die Rohstoffe als Siloware mit den entsprechenden Fördermöglichkeiten automatisch den in der Gummiindustrie verwendeten Mischaggregaten zugeführt werden können. Pulverförmige Rohstoffe können in der Regel nicht gut gefördert werden, da sich die Leitungssysteme zusetzen. Eine Lösung bietet im allgemeinen die Granulation der Rohstoffe. Den guten Handling-Eigenschaften, wie sie durch Granulation erreicht werden können, steht jedoch häufig das schlechte Dispergierverhalten dieser Granulate im Gummi gegenüber, mit dem automatisch ein ungünstiges mechanisches Wertebild (Zugfestigkeit, Bruchdehnung, Weiterreiß-Widerstand etc.) des fertigen Gummiartikels verbunden ist.

Zu den in der Gummiindustrie häufig eingesetzten Verbindungen gehört Zinkoxid.

Dieses läßt sich zwar nach den üblichen Verfahren granulieren, dabei zeigt sich aber, daß die so erhaltenen Granulate wegen ihrer Härte in der Kautschukmischung nicht in zufriedenstellendem Maße dispergiert werden können.

Eine weitere Möglichkeit, Zinkoxid in eine staubarme Form zu überführen, besteht in einer Pelletierung, d.h. Zinkoxid wird in entsprechend ausgerüsteten rotierenden Trommeln bewegt, wodurch eine Verdichtung zu kugelförmigen Pellets aus Zinkoxid erfolgt. Diese so hergestellten Pellets sind jedoch sehr weich und zerfallen leicht. Eine Silierbarkeit und besonders eine pneumatische Förderung sind daher nicht möglich. Ebenso ist der Staubanteil sehr hoch, so daß das Ziel eines staubarmen Produktes nur unzureichend erreicht wird. Auch diese Einsatzform konnte sich daher in der Gummiindustrie nicht durchsetzen.

Aufgabe der Erfindung ist es, ein Zinkoxid in Granulatform bereitzustellen, das sich durch sehr geringes Stauben und gutes Dispergierverhalten in Kautschukmischungen auszeichnet.

Es wurde nun gefunden, daß aus Zinkoxid und gefällter Kieselsäure bestehende Granulate mit einem Gehalt von 5 bis 95 Gew.-% Zinkoxid und 95 bis 5 Gew.-% gefällter Kieselsäure, insbesondere je 50 Gew.-%, einer Korngröße zwischen ~ 0,003 mm und 12 mm, insbesondere von 0,5 bis 5 mm ($\geq$80 %), und einem Schüttgewicht von 350 bis 1250 g/l, insbesondere von 500 bis 600 g/l, diese Bedingungen erfüllen.

Die verwendeten gefällten Kieselsäuren besitzen eine spezifische Oberfläche von 1 bis 1000 $m^2$/g (bestimmt nach BET mit Stickstoff, DIN 66131) Es handelt sich dabei um im Kautschukbereich allgemein verwendete Kieselsäuren.

Gegenstand der Erfindung ist ebenso ein kontinuierlich wie diskontinuierlich durchzuführendes Verfahren zur Herstellung der gut dispergierbaren, aus Zinkoxid und gefällter Kieselsäure bestehenden Granulate, das dadurch gekennzeichnet ist, daß homogene Abmischungen von 5 bis 95 Gew.-% Zinkoxid und 95 bis 5 Gew.-% gefällter Kieselsäure durch Förderschnecken zu zwei Preßwalzen transportiert werden, deren Achsen parallel und senkrecht übereinander angebracht sind, und deren Anpreßdruck variiert werden kann, dort kompaktiert, anschließend mit Hilfe eines Fladenbrechers ein Granulat mit der gewünschten maximalen Korngröße gewonnen und der verbleibende staubförmige Anteil abgetrennt wird.

Der abgetrennte Staub wird in die Granulierung zurückgeführt.

Die Ausbeute liegt bei ca. 60 %.

Der Anpreßdruck der Walzen, deren Oberfläche glatt oder strukturiert sein kann, wird auf 12 bis 40 bar, insbesondere auf 12 bis 25 bar, eingestellt. Eine verwendbare Granulierpresse wird in der DE-OS 1778089 beschrieben, Fladenbrecher und zur Abtrennung des staubförmigen Anteils geeignete Sichter (Zick-Zack-Sichter) oder Sichterkaskaden sind ebenfalls allgemein bekannte Apparaturen.

Für die kontinuierliche wie diskontinuierliche Herstellung der Abmischung steht ebenfalls eine Vielzahl von Mischern zur Verfügung.

In einer vorteilhaften Ausführungsweise führt man die Abmischung mit Hilfe einer auf 0,01 bis 0,7 bar, insbesondere 0,2 bis 0,4 bar, evakuierten Förderschnecke den Preßwalzen zu.

Dieses aus Zinkoxid und Kieselsäure hergestellte Granulat zeichnet sich gegenüber reinem Zinkoxid durch folgende Eigenschaften aus:

1) es ist praktisch staubfrei, d.h., daß maximal 6 Gew.-% des Granulats eine Korngröße <0,074mm (200 mesh) aufweisen.

2) es ist silier-und förderbar.

3) es zeigt ein gutes Dispergierverhalten in den zu vulkanisierenden Kautschukmischungen und

4) es führt gummitechnisch zu besseren Werten im Weiterreiß-Widerstand.

Die erfindungsgemäßen Granulate werden der Kautschukmischung in der in der Gummiindustrie üblichen Art und Weise zugefügt, und zwar in Mengen von 0,5 bis 25 Teilen bezogen auf 100 Teile Kautschuk, bevorzugt aber in Mengen von 1 bis 10 Teilen bezogen auf 100 Teile Kautschuk.

Diese Mengen ergeben sich bei Berücksichtigung der allgemein verwendeten Zinkoxid-Konzentration, wenn ein 1 : 1 zusammengesetztes Granulat eingesetzt wird.

Die über dieses Granulat z.B. in an sich nur Ruß als Füllstoff enthaltenden Kautschukmischungen eingetragene Kieselsäure wirkt sich nicht negativ auf das gummitechnische Eigenschaftsbild aus.

Ihre Menge kann bei der Festlegung des Gesamtfüllstoffgehalts berücksichtigt werden.

Dies ist vor allem dann der Fall, wenn es sich um eine Kieselsäure-gefüllte Kautschukmischung handelt.

Ein bei höheren Anpreßdrucken ( 25 bar) und gegebenenfalls ohne Vorentlüfung in der Transportschnecke hergestelltes Granulat wird vorzugsweise in "härteren" Kautschukmischungen (z. B. Naturkautschuk) eingesetzt. Aufgrund der hier angewandten höheren Scherkräfte sind diese Granulate dann auch ausreichend dispergierbar.

Zu den geeigneten Kautschukarten zählen mit Schwefel sowie Vulkanisationsbeschleunigern zu Elastomeren vernetzbare Kautschuke und deren Gemische. Insbesondere sind dies die halogenfreien Kautschukarten, vorzugsweise sogenannte Dienelastomere. Zu diesen Kautschukarten zählen beispielsweise ölgestreckte, natürliche und synthetische Kautschuke wie Naturkautschuke, Butadienkautschuke, Isoprenkautschuke, Butadienstyrolkautschuke, Butadienacrylnitrilkautschuke, Butylkautschuke, Terpolymere aus Ethylen, Propylen und nichtkonjugierte Diene. Ferner kommen für Kautschukgemische mit den genannten Kautschuken die folgenden zusätzlichen Kautschuke infrage:

Carboxylkautschuke, Epoxydkautschuke, Transpolypentenamer, halogenierte Butylkautschuke, Kautschuke aus 2-Chlorbutadien, Ethylenvinylacetat-Copolymere, Ethylenpropyl-Copolymere, gegebenenfalls auch chemische Derivate des Naturkautschuks sowie modifizierte Naturkautschuke.

Desweiteren können die mit den erfindungsgemäßen Zinkoxid/Kieselsäure-Granulat versehenen Kautschukmischungen weitere in der Kautschukindustrie übliche Komponenten enthalten, wie z. B` übliche Verstärkungssysteme, d. h. Furnaceruße, Channelruße, Flammruße, Thermalruße, Acetylenruße, Lichtbogenruße, CK-Ruße usw. sowie synthetische Füllstoffe wie Kieselsäuren, Silikate, Aluminiumoxidhydrate, Calciumcarbonate und natürliche Füllstoffe wie Clays, Kieselkreiden, Kreiden, Talke usw. sowie silanmodifizierte Füllstoffe.

Übliche in der Kautschukindustrie verwendete Vulkanisationsbeschleuniger (z. B. Sulfenamide, Mercaptobenzthiazole, Mercaptobenzothiazyldisulfide, Triazinbeschleuniger, Thiurame) alleine oder im Gemisch in Mengen von 0, 1 bis 10 Gew.- Teilen bezogen auf 100 Gewichtsteile Kautschuk.

Vulkanisationsverzögerer wie z. B. Vulkalent E: (N-trichlormethylthiophenylsulfonyl)-benzol, PVI:N-(Cyclohexylthio)phthalimid, ebenfalls in Mengen von 0,1 bis 10 Gew.-Teilen bezogen auf 100 Gew.-Teile Kautschuk.

Stearinsäure als Promotor der Vulkanisation in Mengen von 0,5 bis 10 Gew.-Teilen bezogen auf 100 Teile Kautschuk.

In der Kautschuk-Industrie verwendete Alterungs-, Ozon-, Ermüdungs-Schutzmittel, wie z. B. IPPD: N-Isopropyl-N'-phenyl-p-phenylendiamin, TMQ: 2,2,4-Trimethyl-1,2-dihydrochinolin, sowie auch Wachse als Lichtschutzmittel und deren Verschnitte.

Gegebenenfalls Silane, wie z. B. Bis-(3-triethoxysilylpropyl)tetrasulfan, $\gamma$-Chlorpropyltriethoxysilan, $\gamma$-Mercaptopropyltrimethoxysilan, Vinyltrialkoxysilane und deren Verschnitte in einer Menge von 0,1 bis 20 Gew.-Teilen, bevorzugt 1 bis 10 Gew.-Teile, je 100 Gew.-Teile Füllstoff.

Gegebenenfalls Schwefel in einer Menge von 0,1 bis 10 Gew.-Teilen je 100 Gew.-Teile Kautschuk.

Gegebenenfalls Farbstoffe und Verarbeitungshilfsmittel in der üblichen Dosierung.

Die Mischungsherstellung erfolgt in der in der Gummiindustrie bekannten Art und Weise in einem Innenmischer oder auf einem Walzwerk.

Der Anwendungsbereich der erfindungsgemäßen Granulate erstreckt sich auf Gummimischungen, wie sie üblicherweise in Reifen, technischen Artikeln aller Art (z. B. Förderbänder, Walzen, Dichtungen, Schläuche, Keilriemen etc.) und Schuhsohlen Anwendung finden.

Prüfnormen für die Anwendung:

|  | Prüfmethode | Einheit |
|---|---|---|
| $D_{max} - D_{min}$ | DIN 53 529 | Nm |
| Spannungswert 100 % | | |
| 200 % | DIN 53 504 | MPa |
| 300 % | | |
| Weiterreißwiderstand | DIN 53 507 | N/mm |
| $t_{10\%}$ | | min |
| $t_{80\%} - t_{20\%}$ | | min |
| $t_{90\%} - t_{10\%}$ | | min |
| Schüttdichte | DIN 150787/11 | g/l |

In den Anwendungsbeispielen werden folgende Namen und Abkürzungen benutzt, deren Bedeutung hier aufgeführt wird:

| | |
|---|---|
| RSS 1 | ribbed smoked sheet (Naturkautschuk) |
| CORAX®N220 | Ruß, Oberfläche (BET: 115 $m^2$/g (Degussa) |
| Naftolen®ZD | aromatischer Weichmacher |
| Vulkanox®HS | 2,2,4-Trimethyl-1,2-dihydro chinolin (Bayer) |
| Vulkacit®CZ | Benzothiazyl-2-cyclohexylsulfenamid |
| Protector®G35 | Ozonschutzwachs |
| Vulkanox®4010 NA | N-Isopropyl-N'-phenyl-p-phenlendiamin |
| KP 140 | paraffinischer Weichmacher |
| Butyl 301 | Butylkautschuk |
| Eisenoxidbatch | Mischung aus Butylkautschuk und Eisenoxid |
| Sipernat®22 | sprühgetr. Kieselsäure (BET: 190 $m^{2/g}$) |

Beispiel 1:

Kontinuierliche Herstellung des Mischproduktes Zinkoxid/Kieselsäure

100 kg/Stunde Sipernat 22 und 100 kg Zinkoxid/Stunde gelangen, gravimetrisch kontrolliert, in den Gericke-Mischer. Über eingebaute Mischwendeln, die mit einer Drehzahl von 120 UPM rotieren, werden die beiden Komponenten homogenisiert. Nach einer Verweilzeit von 40 sec. verläßt das Mischgut über eine Hohlschnecke den Mischer und wird der Granulation zugeführt.

Beispiel 2:

Diskontinuierliche Herstellung des Mischproduktes Zinkoxid/Kieselsäure

In einem mit Wendelröhre versehenen Kegelstumpfmischer der Firma ALPINE werden jeweils 150 kg Kieselsäure und 150 kg Zinkoxid eingetragen und anschließend 30 min. gemischt. Nach Ablauf der Homogenisierungszeit wird das fertige Mischgut aus dem Mischer ausgetragen und der Granulation zugeführt.

Beispiel 3:

Granulierung von Zinkoxid/Sipernat 22

100 kg Zinkoxid/Sipernat 22 (Verhältnis 1 : 1) werden mittels einer evakuierbaren (Vakuum 0.6 bar) Doppelschnecke in den Spalt zwischen den gegeneinander laufenden Walzen eindosiert. Der Walzendruck wird auf 17 bar eingestellt. Nach Verlassen des Walzenspaltes erfolgt die Zerkleinerung der Schülpen auf eine Granulatgröße 5 mm mittels eines zweistufigen Brechers. Das gebrochene Granulat wird mittels eines Zick-Zack-Sichters durch Einblasen von Luft entstaubt. Die Ausbeute beträgt 58 %. Der Staub wird pneumatisch in den Kompaktierungsprozeß zurückgeführt. (Korngrößenverteilung siehe Tabelle 1)

Beispiel 4:

Verwendung von Zinkoxid/Sipernat 22-Granulat in einer
LkW-Laufflächenrezeptur auf Basis NR

| | 1 | 2 | 3 | 4 | 5 | 6 | 7 |
|---|---|---|---|---|---|---|---|
| RSS 1ML (1+4)=70-80 | 100 | 100 | 100 | 100 | 100 | 100 | 100 |
| Corax N 220 | 50 | 50 | 50 | 50 | 50 | 50 | 50 |
| ZnO RS | 4 | - | - | - | - | - | - |
| Sipernat 22 | 4 | - | - | - | - | - | - |
| **ZnO/Sipernat 22** | | | | | | | |
| 17 bar/0 Vakuum | - | 8 | - | - | - | - | - |
| 17bar/0.4 Vakuum | - | - | 8 | - | - | - | - |
| 17bar/0.6 Vakuum | - | - | - | 8 | - | - | - |
| 20 bar/0 Vakuum | - | - | - | - | 8 | - | - |
| 20 bar/0.4 Vakuum | - | - | - | - | - | 8 | - |
| 20 bar/0.6 Vakuum | - | - | - | - | - | - | 8 |
| Stearinsäure | 2 | 2 | 2 | 2 | 2 | 2 | 2 |
| Naftolen ZD | 3 | 3 | 3 | 3 | 3 | 3 | 3 |
| Protector G 35 | 1 | 1 | 1 | 1 | 1 | 1 | 1 |
| Vulkanox 4010 NA | 2.5 | 2.5 | 2.5 | 2.5 | 2.5 | 2.5 | 2.5 |
| Vulkanox HS | 1.5 | 1.5 | 1.5 | 1.5 | 1.5 | 1.5 | 1.5 |
| Vulkacit CZ | 1.5 | 1.5 | 1.5 | 1.5 | 1.5 | 1.5 | 1.5 |
| Schwefel | 1.5 | 1.5 | 1.5 | 1.5 | 1.5 | 1.5 | 1.5 |

| | 8 | 9 | 10 |
|---|---|---|---|
| RSS 1 ML (1+4)=70-80 | 100 | 100 | 100 |
| CORAX N 220 | 50 | 50 | 50 |
| **ZnO/Sipernat 22** | | | |
| 25 bar/0.4 Vakuum | 8 | - | - |
| 25 bar/0.6 Vakuum | - | 8 | - |
| 30 bar/0.6 Vakuum | - | - | 8 |
| Stearinsäure | 2 | 2 | 2 |
| Naftolen ZD | 3 | 3 | 3 |
| Protector G 35 | 1 | 1 | 1 |
| Vulkanox 4010 NA | 2.5 | 2.5 | 2.5 |
| Vulkanox HS | 1.5 | 1.5 | 1.5 |
| Vulkacit CZ | 1.5 | 1.5 | 1.5 |
| Schwefel | 1.5 | 1.5 | 1.5 |

Rheometerprüfung (Monsanto, Typ:MPV)

Verformungsamplitude: 3 Grad, Prüffrequenz: 3 Zyklen-/min, Laufzeit: 3 h, Prüftemperatur: 150 $^{\circ}$C

| | 1 | 2 | 3 | 4 | 5 | 6 | 7 |
|---|---|---|---|---|---|---|---|
| $D_{max}-D_{min}$ (Nm) | 9.48 | 9.16 | 8.97 | 8.92 | 8.80 | 8.88 | 8.82 |
| $t_{10\%}$ (min) | 7.6 | 7.9 | 8.0 | 8.2 | 8.2 | 8.2 | 8.3 |
| $t_{80\%}-t_{20\%}$ (min) | 1.7 | 1.8 | 1.8 | 1.8 | 1.9 | 1.8 | 1.9 |
| $t_{90\%}-t_{10\%}$ (min) | 3.2 | 3.4 | 3.3 | 3.4 | 3.5 | 3.4 | 3.5 |

| | 8 | 9 | 10 |
|---|---|---|---|
| $D_{max}-D_{min}$ (Nm) | 9.14 | 8.92 | 9.00 |
| $t_{10\%}$ (min) | 8.1 | 8.2 | 8.4 |
| $t_{80\%}-t_{20\%}$ (min) | 1.9 | 1.8 | 1.8 |
| $t_{90\%}-t_{10\%}$ (min) | 3.5 | 3.4 | 3.3 |

Ungealtert

Vulkanisationstemperatur: 150 $^{\circ}$C

| | 1 | 2 | 3 | 4 | 5 | 6 | 7 |
|---|---|---|---|---|---|---|---|
| Spannungswert 100 % (MPa) | 2.2 | 2.2 | 2.2 | 2.2 | 2.1 | 2.1 | 2.2 |
| Spannungswert 200 % (MPa) | 5.7 | 5.9 | 5.9 | 6.0 | 5.8 | 5.8 | 5.9 |
| Spannungswert 300 % (MPa) | 10.9 | 11.1 | 11.1 | 11.0 | 10.9 | 11.1 | 11.3 |
| Weiterreiß-widerstand DIN 53 507 (N/mm) | 26 | 31 | 33 | 35 | 35 | 32 | 34 |

| | 8 | 9 | 10 |
|---|---|---|---|
| Spannungswert 100 % (MPa) | 2.3 | 2.2 | 2.3 |
| Spannungswert 200 % (MPa) | 6.1 | 6.0 | 6.2 |
| Spannungswert 300 % (MPa) | 11.4 | 11.2 | 11.5 |
| Weiterreiß-widerstand DIN 53 507 (N/mm) | 33 | 34 | 38 |

Das Beispiel zeigt, daß durch Abmischung von Zinkoxid mit Sipernat 22 und anschließender Granulierung bei sonst nahezu gleichem gummitechnischen Wertebild die Weiterreißwiderstände deutlich erhöht werden.

Beispiel 5:

8

Untersuchung des Dispergierverhaltens von Zinkoxid/
Sipernat 22-Granulaten mit dem Butyltest

|  | 1 | 2 | 3 | 4-8 |
|---|---|---|---|---|
| Butyl 301 | 92.5 | 92.5 | 92.5 | 92.5 |
| Eisenoxidbatch | 15 | 15 | 15 | 15 |
| KP 140 | 5.2 | 5.2 | 5.2 | 5.2 |
| ZnO RS | 8.5 | - | 8.5 | - |
| Sipernat 22 | - | 8.5 | 8.5 | - |
| ZnO/Sipernat 22 GR* | - | - | - | 17 |

*hergestellt unter den im Beispiel 4 genannten Bedingungen.

Butyltest:

Die auf ihr Dispergierverhalten zu untersuchenden Zinkoxid/Sipernat 22-Granulate werden in eine sehr weiche, mit Eisenoxid rot gefärbte Butylkautschukmischung eingearbeitet. Durch die rote Farbe lassen sich eventuell vorhandene weiße Stippen, die auf mangelnde Dispergierung der zu untersuchenden Substanzen zurückzuführen sind, optisch gut erkennen. Darüberhinaus wird der Anschnitt dieser zu einem 6 mm Fell ausgezogenen Mischung auf Glanz hin untersucht. Hochgläzend bedeutet gute, matt hingegen schlechte Dispergierung.

|  | Stippen | Anschnitt |
|---|---|---|
| ZnO Pulver | ohne sichtbare Stippen | hochglänzend |
| Sipernat 22 | geringe Zahl kleiner Stippen | hochglänzend |
| ZnO/Sip. 22 Pulver | geringe Zahl kleiner Stippen | hochglänzend |

|  | Stippen | Anschnitt |
|---|---|---|
| ZnO Pulver | ohne sichtbare Stippen | hochglänzend |
| Sipernat 22 | geringe Zahl kleiner Stippen | hochglänzend |
| ZnO/Sip. 22 Pulver | geringe Zahl kleiner Stippen | hochglänzend |
| ZnO/Sip. 22 Vakuum: 0 Druck: 17 bar | höhere Anzahl kleiner Stippen | seidig glänzend |
| ZnO/Sip. 22 Vakuum: 0.6 Druck: 17 bar | praktisch stippen-los | hochglänzend |
| ZnO/Sip.22 Vakuum: 0.4 Druck: 20 bar | geringe Anzahl kleiner und mittlerer Stippen | seidig glänzend |
| ZnO/Sip.22 Vakuum: 0.4 Druck: 25 bar | geringe Zahl kleiner und mittlerer Stippen | matt glänzend |
| ZnO/Sip. 22 Vakuum: 0.6 Druck: 30 bar | Schnittfläche mit kleinen und mittleren Stippen | matt glänzend |

Fazit:

Das Beispiel zeigt, daß die Bedingungen für die Herstellung der Granulate genau erarbeitet und eingehalten werden müssen. Andernfalls sind nicht akzeptable Einschränkungen im Dispergierverhalten die Folge. Im vorliegenden Beispiel liegen die optimalen Bedingungen bei einem Druck von 17 bar und einen angelegten Vakuum von 0.6 bar.

Beispiel 6:

Beurteilung der Dispergierung der Zinkoxid/Sipernat 22-Granulate mittels Shell-Test

Verfahren:

Die im Beispiel 5 genannten, mit den unter verschiedenen Bedingungen hergestellten Zinkoxid/Sipernat 22-Granulat versehenen Mischungen werden mittels eines Extruders durch ein Strainersieb gepreßt.

Eventuell vorhandene harte undispergierte Teilchen werden auf dem Sieb zurückgehalten. Anschließend wird der eventuell mit Rückstand beladene Sieb zwischen zwei Aluminiumfolien abgepreßt. Liegen undispergierte harte Teilchen vor, entsteht auf der Folie ein Kratzermuster. Die Anzahl und die Tiefe der Kratzer läßt Rückschlüsse auf die Dispergierung des untersuchten Materials zu.

Die untersuchten Zinkoxid/Sipernat 22-Muster ergaben folgendes Bild:

```
ZnO-Pulver              kratzerfrei, bestes Bild


Sipernat 22             flache Kratzer in sehr geringer Zahl


ZnO/Sip. 22             flache Kratzer in sehr geringer Zahl
Pulver                  -besser als reines Sipernat 22


ZnO/Sip. 22             fast kratzerlos
Vakuum:0
Druck: 17 bar




ZnO/Sip. 22             nahezu kratzerlos
Vakuum: 0.6
Druck: 17 bar


ZnO/Sip. 22             fast kratzerlos
Vakuum: 0.4
Druck: 20 bar


ZnO/Sip. 22             flache Kratzer
Vakuum: 0.4
Druck: 25 bar


ZnO/Sip. 22             flache, aber lange Kratzer,
0.6                     bestes Bild bei 30 bar
Druck: 30 bar
```

| Probe Nr. | 2 | 3 | 4 | 5 | 6 | 7 | 8 | 9 | 10 |
|---|---|---|---|---|---|---|---|---|---|
| Druck (bar) | 17 | 17 | 17 | 20 | 20 | 20 | 25 | 25 | 30 |
| Vakuum | – | 0.4 | 0.6 | – | 0.4 | 0.6 | 0.4 | 0.6 | 0.6 |
| mm | | | | | | | | | |
| >5 mm | 0 | 0 | 0 | 0 | 0 | 0 | 0 | 0 | 0 |
| 3,15 – 5 | 3.3 | 3.5 | 3.6 | 4.0 | 4.7 | 4.3 | 4.0 | 5.3 | 4.4 |
| 2,5 – 3,15 | 6.9 | 7.9 | 7.9 | 8.9 | 9.9 | 8.3 | 8.7 | 10.2 | 9.5 |
| 1,4 – 2,5 | 34.2 | 35.1 | 35.7 | 37.6 | 42.4 | 36.7 | 36.6 | 38.6 | 38.4 |
| 1 – 1,4 | 18.0 | 17.3 | 16.9 | 18.4 | 16.1 | 16.8 | 17.4 | 16.2 | 17.5 |
| 0.5 – 1.0 | 21.1 | 21.0 | 19.4 | 20.9 | 16.6 | 19.8 | 21.0 | 18.9 | 20.2 |
| 0.5 – 0.074 | 10.46 | 10.11 | 10.31 | 6.51 | 6.39 | 9.43 | 8.19 | 7.61 | 7.13 |
| <200 mesh | 5,85 | 4,99 | 5,74 | 3,64 | 4.03 | 4.43 | 3.76 | 3.35 | 3.13 |
| Schüttdichte (g/l) | 526 | 515 | 521 | 549 | 549 | 549 | 556 | 562 | 568 |

Tabelle 1

Korngrößenverteilung von bei 5 mm gebrochenem Material (Sipernat/ZnO 1 : 1) (Gew.-%)

## Patentansprüche

1. Verfahren zur Herstellung von gut dispergierbaren, aus Zinkoxid und gefällter Kieselsäure bestehenden Granulaten,

12

dadurch gekennzeichnet, daß homogene Abmischungen von 5 bis 95 Gew.-% Zinkoxid und 95 bis 5 Gew.-% gefällter Kieselsäure durch Förderschnecken zu zwei Preßwalzen transportiert werden, deren Achsen parallel und senkrecht übereinander angebracht sind und deren Anpreßdruck variiert werden kann, dort kompaktiert, anschließend mit Hilfe eines Fladenbrechers ein Granulat mit der gewünschten maximalen Korngröße gewonnen und der verbleibende staubförmige Anteil abgetrennt wird.

2. Verfahren gemäß Anspruch 1,
daß sich der Anpreßdruck auf 12 bis 40 bar beläuft.

3. Verfahren gemäß den Ansprüchen 1 und 2,
dadurch gekennzeichnet, daß die Abmischungen mit Hilfe einer von auf 0,01 bis 0,7 bar evakuierten Förderschnecke zu den Preßwalzen transportiert werden.

4. Aus Zinkoxid und gefällter Kieselsäure bestehende gut dispergierbare Granulate mit einem Gehalt von 5 bis 95 Gew.-% Zinkoxid und 95 bis 5 Gew.-% gefällter Kieselsäure und einem Schüttgewicht von 350 bis 1250 g/l.

5. Verwendung der Granulate gemäß Anspruch 4 in vulkanisierbaren neben Schwefel Füllstoffe, Beschleuniger und weiteren üblichen Bestandteilen enthaltenden Kautschukmischungen,
dadurch gekennzeichnet, daß man das Granulat in der Menge einsetzt, daß die Kautschukmischung 0,5 bis 25 Gew.-Teile, bevorzugt 1 bis 10 Gew-Teile Zinkoxid, bezogen auf 100 Gew.-Teile Kautschuk, enthält.